(19) **Europäisches Patentamt / European Patent Office / Office européen des brevets**

(11) **EP 1 784 023 A2**

(12) **EUROPEAN PATENT APPLICATION**

(43) Date of publication:
**09.05.2007 Bulletin 2007/19**

(51) Int Cl.:
***H04N 7/26*** *(2006.01)*

(21) Application number: **06255606.3**

(22) Date of filing: **31.10.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **03.11.2005 GB 0522486** | (71) Applicant: **Tandberg Television ASA**<br>**0661 OSLO (NO)**<br><br>(72) Inventor: **Bock, Alois Martin**<br>**Hampshire SO53 4RH (GB)**<br><br>(74) Representative: **Want, Clifford James**<br>**Harrison Goddard Foote**<br>**40-43 Chancery Lane**<br>**London WC2A 1JA (GB)** |

(54) **Blocking artefacts reduction with optional dithering**

(57)  A method and apparatus for processing a compressed video signal to remove blocking artefacts includes decompressing the video signal to provide a raw decoded signal and a quantisation parameter. Mean, maximum and minimum values of samples of pixels surrounding a pixel C of concern are determined. The mean, maximum and minimum values, the quantization parameter and a random number are entered into a logic circuit 3 to determine whether a dither signal is applied to the value of the pixel of concern, such that the dither signal is applied only in areas of low spatial detail, as indicated by a difference of the maximum and minimum values being less than a first predetermined threshold, and where the quantization parameter is higher than a second predetermined threshold value.

Figure 1

EP 1 784 023 A2

**Description**

This invention relates to processing a compressed signal which may be a video and/or audio signal.

MPEG is a well known form of signal compression, but certain versions of MPEG are susceptible to blocking artefacts. There are generally two types of blocking artefacts in a MPEG compressed/decompressed video signal. In spatially high active picture areas, blocking can occur when quantization reaches a high level and there are insufficient discrete cosine transform (DCT) coefficients to represent the full detail of the picture. This type of blocking can be reduced by spatial low-pass filters which may be located either within the encoder and decoder prediction loop, or as a post-processing operation after decoding the compressed video signal.

The second type of blocking is sometimes referred to as least significant bit (LSB) block noise or "posterisation". This second type of blocking occurs in spatially inactive picture areas, i.e. areas such as sky, where there is no detail, but there are subtle changes of luminance and/or colour. In a source signal there is often a small amount of noise which tends to hide contouring between picture areas where the luminance and colour-difference signals change by only one least significant bit (LSB). However, this noise is removed in the compression process for all but extremely low quantization factors. Under most normal operating conditions, i.e. at normal bit rates, each block in these inactive areas is coded without any AC coefficient, thus decoding into a block with constant luminance and colour-difference signals. A spatial low-pass filter is unable to eliminate this type of blocking artefact because there are no frequency components that the filter is able to remove, i.e. the output of the filter would change by the same LSB as the input. Therefore, the blocking artefact remains untouched by any such filter.

This problem exists in all block-based compression systems in which the video component signals are represented by less than 10-bit numbers, for example, MPEG-2, MPEG-4 part 2, MPEG-4 part 10 (main profile) and SMPTE 421 M (VC-1) all use 8-bit numbers for luminance and chrominance signals. However, there are also differences in the compression algorithm itself which can have an effect on the visibility of posterisation effects. It has been found that in MPEG-2 and MPEG-4 part 2 systems, the problem is less severe than in more advanced coding algorithms, such as MPEG-4 part 10 and VC-1. The reason is that small inverse DCT inaccuracies, together with mismatch control algorithms, defined in MPEG-2 and MPEG-4 part 2, reintroduce a small amount of noise in the decoded picture which tends to hide LSB block noise to a certain extent. Since the transforms and inverse transforms in MPEG-4 part 10 and VC-1 are exactly defined integer operations, the transforms with these systems do not suffer from DCT inaccuracies and there is, therefore, no need for mismatch control. Because MPEG-4 part 10 and VC-1 have bit accurate inverse transforms, they are able to sustain many prediction generations without the need for intra-coded pictures. The disadvantage is that because there is no noise added in the decoding process, LSB noise is not hidden.

The present invention seeks to overcome the foregoing disadvantage with MPEG-4 part 10 and VC-1 coding systems.

According to a first aspect of this invention there is provided a method as claimed in claim 1 herein.

According to a second aspect of the invention there is provided an apparatus as claimed in claim 6 herein.

Preferred features of the invention are defined by the dependent claims.

The invention will now be described, by way of example, with reference to the accompanying drawings, in which:

Figure 1 shows, in graphical form, how an output video signal with dither more closely approximates to a mean value of pixels surrounding a pixel of concern than does a raw decoded video signal, and

Figure 2 shows, in block schematic form, an apparatus for implementing the method in accordance with this invention.

It is known to hide contouring artefacts in images by adding a small amount of noise using a system known as "dither". Dither is a well known signal processing technique used in both audio and video processing where the dynamic range of signal variables is lower than the perception of an observer/listener. Dither, in known systems, is employed in encoding a signal.

In distinction, the present invention is directed toward a decoded signal. A difficulty encountered with post-decompression is that if dither is applied, it is not readily possible to control the amount of dither. That is, it is not readily possible to decide where in an image, and under what conditions, a particular amount of dither noise should be added. It would be undesirable if a constant amount of dither noise is added, regardless of picture content and quantization factor.

In this invention, dither is to be applied only in areas with low spatial detail and only if a local quantization factor is above a predetermined threshold value. The local quantization factor is given to a macro block, i.e. a block of four 8 x 8 pixels. Thus, the dither amplitude depends upon the local quantization factor.

Whether or not dither should be applied, and the polarity of the dither signal, is controlled in such a way that a spatial average of the final output signal is a closer approximation to the mean value of the surrounding pixels than is the raw signal.

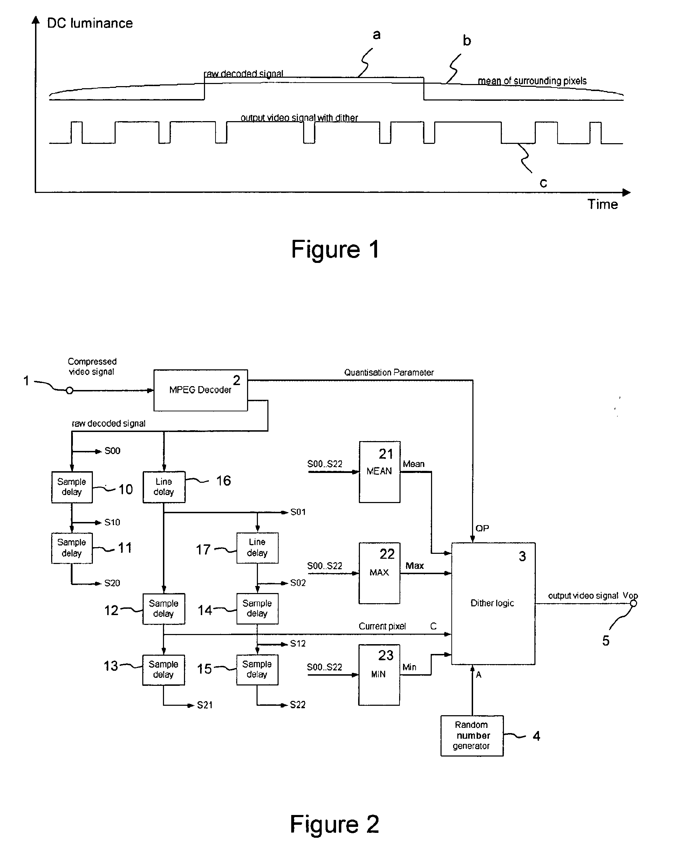

Figure 1 is a graphical representation having axes of DC luminance against time where curve (a) represents an MPEG raw decoded signal, curve (b) represents the mean of the value of the surrounding pixels of a pixel of concern and curve (c) shows the output video signal with dither applied. From the curves it will be observed that, although the dither signal is random, the probability of ones and zeros changes depending on the mean of surrounding pixels, thus producing an average which changes more smoothly between LSB levels. It is this average that is observed by the human eye because the human visual system tends to "filter out" the dither noise.

Referring now to Figure 2 which shows one embodiment of hardware for performing the present invention, a compressed video signal is applied at terminal 1 to an MPEG decoder 2. Using a matrix of line and pixel delays 10-17, an image area of 3 x 3 pixels centred around a current pixel C is analysed and maximum, minimum and mean values of the surrounding pixels are calculated by logic circuits 21 -23. These values are fed to a dither logic circuit 3 together with the current pixel C, the local quantization parameter QP and a random number A generated by a random number generator 4.

Considering the following matrix of 3 x 3 pixels.

| | | |
|---|---|---|
| S00 | S10 | S20 |
| S01 | C | S21 |
| S02 | S12 | S22 |

where Sxx are surrounding pixels above, below, left and right of the currently processed pixel C.

From these signals the following intermediate variables are calculated which are 8-bit values of luminance.

$Max = maximum (S00..S22)$
$Min = minimum (S00..S22)$
$Mean = \Sigma(S00..S22)/8$
$P = Mean - C$

$$if\ (P< 0)\ then$$

$$P = -P$$

$$Sign = -1$$

$$else$$

$$Sign = 1$$

Note that both Mean and P are floating point variables.

Thus, P is representative of the polarity of sample C in relation to the surrounding pixels and will be positive or negative.

In the foregoing example, the dither amplitude is fixed to be 1 LSB and may be positive or negative in dependence upon the surrounding pixels. The dither signal removes LSB noise. If the current pixel signal is within 1 LSB of the mean of the surrounding pixels, then P will represent the probability with which a dither correction should be applied. Further, the dither signal, if applied, should be equal to the value "sign". However, the dither signal is only applied if the 3 x 3 block of pixels does not contain higher amplitude detail, i.e. max-min<3, indicating that there is a plain scene, e.g. sky and the difference in mean pixel luminance from pixel C luminance is small. The requirement is, further, that the quantization parameter must be higher than a predetermined threshold. These conditions ensure that dither noise is only applied in those picture areas where LSB noise would have been made visible.

$$If\ ((P < 1)\ AND\ (A<P)\ AND\ ((Max-Min) < 3)\ AND\ (QP > T))\ then$$

$$dither = Sign$$

$$else$$

$$dither = 0$$

where
A = random number with uniform probability density between 0 and 1

QP = quantization parameter

T = threshold which QP must exceed for the dither signal to be applied.

It is this latter computation that is performed by the dither logic circuit 3 which then provides a video output signal Vop at terminal 5 given by

$$Vop = C + dither$$

Note that in order to reduce LSB block noise effectively, the algorithm described above should be applied to all three video component signals Y, Cr and Cb independently.

The computation performed by the dither logic circuit 3 is arranged to remove LSB block noise. However, those skilled in the art will understand that the thresholds and amplitudes defined above may be varied in such a way that higher amplitude block noise may be handled by a higher amplitude dither signal.

In Figure 2 there are various sample delays 10 - 15 of typically one clock pulse and delays 16, 17 of one line so as to provide appropriate timing of samples S00 - S22. A logic circuit 21 computes the mean of the samples S00 - S22, logic circuit 22 computes the maximum of the samples S00 - S22 and logic circuit 23 computes the minimum of the samples S00 - S22. Output from the logic circuits 21 - 23, the current pixel C and the quantization parameter QP output from the MPEG decoder 2 are all input to the dither logic circuit 3, together with the random number A, as aforesaid.

**Claims**

1. A method of processing a compressed video signal includes the steps of: decompressing said video signal to provide a raw decoded signal (a) having luminance samples for pixels surrounding a pixel of concern (C), computing mean, maximum and minimum values of the samples and applying the mean, maximum and minimum samples, together with a value of the pixel of concern (C), a quantization parameter (QP) and a random number (A) to a logic circuit (3), wherein a dither signal is applied to the value of the pixel of concern only in areas of low spatial detail in a scene and where the quantization parameter is higher than a predetermined threshold value.

2. A method as claimed in claim 1, wherein the samples are taken from a matrix of samples immediately surrounding the pixel of concern.

3. A method as claimed in claim 1 or 2, wherein an amplitude of the dither signal is fixed at one significant bit.

4. A method as claimed in any preceding claim, wherein the dither signal is applied only if a difference between the maximum and minimum values of the luminance samples of the matrix of pixels does not exceed 3.

5. A method as claimed in any preceding claim, wherein the video signal comprises luminance and colour difference components and each component is decompressed and has said dither signal applied thereto.

6. An apparatus comprising:

   video decoder means (2) arranged to output a raw decoded signal (a) and a quantisation parameter (QP);
   sample delay means (10 - 15) and line delay means (16, 17) arranged to sample pixels surrounding a pixel of interest of the raw decoded signal (a);
   mean calculating means (21) arranged to calculate a mean value of the sample pixels;
   first comparator means (22) arranged to determine a maximum value of the sample pixels;
   second comparator means (23) arranged to determine a minimum value of the sample pixels;
   random number generator means (4); and
   logic means (3) arranged to dither the pixel of interest if:

   a difference between the mean value and the value of the pixel of interest is less than 1;
   a random number generated by the random number generator is less than the difference between the mean value and the value of the pixel of interest;
   a difference between the maximum value and the minimum value is less than a first threshold value; and
   the quantization parameter (QP) is greater than a second threshold.

**7.** An apparatus as claimed in claim 6, wherein the first threshold is 3.

**8.** An apparatus as claimed in claims 6 or 7, wherein the sample delay means and line delay means are arranged to sample pixels immediately surrounding the pixel of interest.

**9.** An apparatus as claimed in any of claims 6 to 8, wherein an amplitude of the dither signal is fixed at one significant bit.

Figure 1

Figure 2